# EUROPEAN PATENT APPLICATION

(11) **EP 4 257 465 A1**
(43) Date of publication of application: **11.10.2023**
(21) Application number: 23165407.0
(22) Date of filing: 30.03.2023
(51) Int. Cl.: B62J 3/04

(54) **BELL FOR ATTACHMENT TO A BICYCLE HANDLEBAR**

(30) Priority: 04.04.2022 NL 2031487
(71) Applicant: Widek B.V., 2921 AA Krimpen aan den Ijssel (NL)
(72) Inventor: VAN DE LAGEMAAT, Piet, 2921 AA Krimpen aan de IJssel (NL)
(74) Representative: Patentwerk B.V.

(57) **Abstract**

The present invention relates to a bell for attachment to a bicycle handlebar, comprising a hollow body, a handlebar attachment means, an upright support comprising a first outer end connected to the handlebar attachment means and a second outer end connected to the hollow body, a lever holding means connected to the upright support and/or the handlebar attachment means, a lever for striking the hollow body, and a resilient element having an attachment outer end connected to the upright support and/or handlebar attachment means. The resilient element extends from the attachment outer end to an opposite contact outer end. The contact outer end is resiliently pressed against the lever contact end and the direction in which the upright support and the direction in which the resilient element extend mutually enclose an angle between 0 and 45 degrees.

## Description

### Technical Field

The present invention relates to a bell, and more particularly, to a bell for attachment to a bicycle handlebar comprising: a hollow body; a handlebar attachment means; an upright support comprising a first outer end connected to the handlebar attachment means, and a second outer end connected to the hollow body; a lever holding means connected to the upright support and/or the handlebar attachment means; a lever striking the hollow body, a pivotable connection, a lever contact end, and an operating section for operating the lever, wherein the lever is pivotably connected to the lever holding means via the pivotable connection and wherein the operating section is located outside the hollow body; and a resilient element having an attachment outer end connected to the upright support and/or handlebar attachment means.

### Background

Bells, and in particular bicycle bells, generate sound when struck. They usually comprise some sort of hollow body, often having a dome shape, mounted on a support. Due to its audible characteristics, this hollow body of often made of metal, or a metal alloy. Bells further comprise a clapper. For bicycle bells, this clapper can have many forms, and can be operated directly or indirectly with a finger. Operating the clapper sets a mechanism in motion that causes the clapper to strike the hollow body, resulting in an audible signal. A resilient element, such as a spring, is tensioned by this operation and causes the clapper to return to its initial position, ready to be operated again.

There is quite some variance in the construction of bicycle bells. Patent application GB 642209 discloses a bell for a cycle comprising a dome supported upon an upright bracket and a spring arm extending from the dome in a radial manner. The spring arm protrudes from the dome beyond the periphery of the dome. The spring arm is inherently resilient and adapted to strike the peripheral edge or adjacent part of the dome to give the desired audible warning. The spring arm can be made of steel.

Patent application GB 850877 discloses a bicycle bell comprising a dome, a metal strip shaped at one end to form a clip for attachment to a bicycle handlebar and at the other end for attachment to the interior of the dome. A finger-operable striker is attached to a part of the strip within the dome. The striker is secured to one end of a helical coiled spring.

International patent application WO 2020/212174 A1 discloses a bicycle bell including a bell body, a thumb-operated clapper or lever, a frame element and a mounting mechanism. The thumb-operated clapper is spring-mounted to the pin forming the frame element.

German Utility Model DE 20208028 U1 discloses a bicycle bell comprising two spaced apart bells, one over the other. A plastic hammer, serving as a sound generator, is attached by a steel spring with the bell frame.

Chinese Utility Model CN 2111912 U discloses a bell, in particular a bicycle bell comprising a bell shell and a tone hammer. The bell shell is sheathed on a center shaft which is fixed on a carrier. The tone hammer is also fixed on the central shaft by an elastic object.

Prior art bicycle bells have certain disadvantages. The number individual components making up the internal mechanism of the bell can be rather high, resulting in a complex and non-durable mechanism that is prone to break. Even simple bicycle bells wherein the clapper is directly connected to the support via a spring consist of a multitude of parts of varying materials that have to be assembled to a finished product. Each connection between these parts adds to the risk of breaking the bicycle bell, and as such, reduces the lifespan of the bell.

As bicycle bells are a mass manufactured product, profit margins are generally small. Any additional unnecessary use of material decreases these profit margins. Prior art bicycles often have a sub-optimal construction with regard to minimization of material usage and maximization of durability. There is thus a need for a bicycle bell that not only has a high durability, but minimizes material usage as well. It is therefore an objective of the present invention to provide a bell, and more particular a bicycle bell, that has a high durability and minimizes material usage.

### Summary of the invention

In accordance with the present invention, there is provided a bell for attachment to a bicycle handlebar, comprising: a hollow body, a handlebar attachment means, an upright support comprising a first outer end connected to the handlebar attachment means, and a second outer end connected to the hollow body, a lever holding means connected to the upright support and/or the handlebar attachment means, a lever for striking the hollow body, a lever contact end, and an operating section for operating the lever, wherein the lever is pivotably connected to the lever holding means via a pivotable connection and wherein the operating section is located outside the hollow body, and a resilient element having an attachment outer end connected to the upright support and/or handlebar attachment means, wherein the resilient element extends from the attachment outer end to an opposite contact outer end, wherein the contact outer end is resiliently pressed against the lever contact end, and wherein the direction in which the upright support and the direction in which the resilient element extend mutually enclose an angle between 0 and 45 degrees.

The direction in which the upright support extends is typically an upward direction, from the handlebar to the top of the bell. The direction in which the resilient element extends is typically a lengthwise direction, from its attachment outer end to its contact outer end.

Advantageously, this mutually enclosed angle ranging between 0 and 45 degrees orients the resilient element and the upright support such that when the lever is operated, the contact outer end of the resilient element is deflected towards the upright support. Tension is built in the resilient by this deflection, and subsequent release of this tension, by release of the lever, forces the lever to strike the hollow body, generating an audible signal.

The deflection of the contact outer end of the resilient element results in the bending of the resilient element over its length. This bending is typically however very limited. A slight bend of the resilient element already generates sufficient tension that is subsequently released such that the lever strikes the hollow body. This has the added advantage that the material of the resilient element is not put under excessive strain, leading to longevity of the resilient element.

As used herein, hollow relates to a characteristic of an object. An object is hollow if it circumferentially encloses a space.

As used herein, inside and outside define locations relative to a hollow object. Something is located inside a hollow object if it is present in the circumferentially enclosed space of the hollow object. Something is located outside a hollow object if it is not present in the circumferentially enclosed space of the hollow object.

As used herein, elongate relates to the shape of an object. An object is elongate if an axis having the largest possible length between two points of the object is at least twofold larger than an average largest width of that object in a plane perpendicular to that axis over the full length of the axis.

As used herein, a degree is also known as an arc degree or a degree of arc.

Preferably, the upright support and/or the resilient element are elongate. This allows the resilient element to bend over its entire length, from its attachment outer end, to its contact outer end, without having to use excessive force. As such, optimal use is made of the material of the resilient element. The upright support serves to keep the hollow body spaced apart from the attachment means. An elongate upright support is advantageous as this shape represents an optimal way of material usage with respect to its main function of keeping the hollow body spaced apart from the attachment means.

The lever may comprise a protrusion for striking the hollow body, wherein the protrusion is at least partially located within the hollow body. This ensures that the force, generated by tensioning of the resilient element is transmitted via the protrusion to the hollow element, resulting in a pleasant and clear audible signal.

Preferably, the mutually enclosed angle is between 2 and 40 degrees, between 3 and 35 degrees, between 3 and 30 degrees, between 4 and 28 degrees, between 5 and 25 degrees, between 8 and 25 degrees, between 9 and 23 degrees, between 10 and 22 degrees, between 12 and 20 degrees, between 12 and 18 degrees, between 13 and 17 degrees, or between 14 and 16 degrees.

The mutually enclosed angle can also vary between 0 and 40 degrees, between 0 and 30 degrees, between 0 and 25 degrees, between 0 and 20 degrees, or between 0 and 15 degrees.

The resilient element and the upright support can be arranged parallel or close to parallel to each other, wherein the mutually enclosed angle is between 0 and 10 degrees, between 0 and 5 degrees, between 0 and 3 degrees, or between 0 and 1 degree.

As the contact end of the resilient element deflects toward the upright support, an almost parallel, or close to parallel orientation of the resilient element with respect to the upright support ensures that a force originating from the lever, has a direction that is almost perpendicular to the length of the resilient element and acts upon the contact outer end of this element. This ensures that optimal use is made of the flexibility of the resilient element and minimal forces act upon this element, increasing its lifespan, and facilitates operation of the lever.

The lever holding means may be connected to the upright support; wherein preferably the lever holding means is not connected to the handlebar attachment means. Connecting the lever holding means to the upright support allows the upright support and the lever holding means to be molded out of a single piece of material. As the lever holding means and the upright support can form a single structure, there is no need to assemble the lever holding means and upright support after fabrication of these parts, resulting in a simplified assembly process and a more durable construction. The lever holding means can be attached to the handlebar attachment means, although this is not required. If the lever holding means is already attached to the upright support, attaching the lever holding means to the handlebar attachment means is not required, thereby saving on material usage.

The resilient element may be connected to the upright support; wherein preferably the resilient element is not connected to the handlebar attachment means. The upright support may have a higher strength as compared to the handlebar attachment means in order to adequately keep the resilient element in place. As a result, the handlebar attachment means may advantageously be manufactured from a relatively thin material, as its function, in this configuration, is not to support the resilient element.

Preferably, the upright support and the resilient element are connected such that the upright support and the resilient element form a V-shape. One outer end of the V, representing the contact outer end of the resilient element, is movable towards the other outer end of the V, representing the second outer end of the upright support, or a position between the first and the second outer end of the upright support. The lower part of the V represents the connection between the upright support and the resilient element. Due to this connection, and the associated orientation of the resilient element and the upright support, a force required to deflect the contact outer end of the resilient element is minimized as the moment of force is maximized due to the relatively large distance between the connection and the contact outer end of the resilient element.

The resilient element can be a beam, having a square cross section. As deflection of the contact outer end of the resilient element towards the upright support stretches one side of the resilient element and compresses an opposite other side, it is advantageous for the surfaces of both these sides to be relatively large, such that sufficient tension is built when the lever is operated and the resilient element is bent. A beam shaped resilient element accomplishes this.

Preferably, the contact outer end of the resilient element is a flat surface having a surface area ranging between 0.5 mm² and 25 mm² and wherein the lever contact end is a flat surface having a surface area ranging between 0.5 mm² and 25 mm²; wherein, when the bell is not operated, both flat surfaces are flush with each other and abut each other. In a non-operated state, i.e. when the bell is not operated, forces generated by the resilient element and the lever act in opposite directions and cancel each other out via a contact plane formed by both abutting flat surfaces. As both the contact outer end of the resilient element as well as the lever contact end may comprise flat surface areas that are flush with each other and abut each other when the bell is not operated, the pressure, resulting from pressing these surfaces against each other, is distributed over the entire surface are of the contact outer end of the resilient element and the lever contact end of the lever. Due to the even distribution of pressure over these surfaces, instead of the pressure being distributed to a lesser degree, the lifespan of both the resilient element, as well as the lever itself are increased.

Preferably, the resilient element is made of plastic, such as high density polyethylene, polycarbonate, acrylonitrile butadiene styrene, polyphenylsulfone, ultra-high-molecular-weight polyethylene, or polyoxymethylene. Plastic can be easily molded in the desired shape, is resilient, and does not suffer from fatigue like metal does.

In addition or as an alternative, the upright support, lever holding means, resilient element, and/or lever can be made of plastic, such as high density polyethylene, polycarbonate, acrylonitrile butadiene styrene, polyphenylsulfone, ultra-high-molecular-weight polyethylene or polyoxymethylene. This allows the bell, or parts thereof, apart from the hollow body, to be molded from a single piece of plastic. Subsequently, material usage is minimized, as no additional connecting element between the upright support, lever holding means, resilient element, and/or lever are required. As a result, the complexity of the assembly process of the bell is reduced. In addition, as the number of individual components is lowered, the bell is less prone to break and the lifespan of the bell is increased.

In a preferred embodiment, the upright support, lever holding means, resilient element, and/or lever are made of a thermoplastic or thermosoft plastic, more in particular an acetal, more in particular polyoxymethylene. Polyoxymethylene is also known as acetal, polyacetal, and polyformaldehyde. Polyoxymethylene can be a homopolymer or a copolymer and can be hemiacetal-terminated. The hemiacetal ends of polyoxymethylene may be converted such that the polyoxymethylene is thermally stable and can be molten and processed. This conversion can be initiated with for example acetic anhydride. The polyoxymethylene may thus be a thermally stable polyoxymethylene.

At least a part of the hollow body can be dome-shaped. A dome-shape has the advantage of being robust as it has a high strength. There are no acute corners on a dome-shape, and objects are less likely to get caught by such a shape. As a result the bell is less likely to break.

The hollow body can be made of a metal or a metal alloy, such as iron, tin, zinc, copper, bronze, brass, steel, stainless steel, or any combination thereof. When the hollow body is struck, it produces a pleasant and recognizable audible signal. In addition, a hollow body made of a metal or a metal alloy has a high durability. As the hollow body generally contains no moving parts, metal fatigue plays a negligible role here.

Preferably, the upright support, the resilient element, the lever and the lever holding means are at least partly located inside the hollow body. Not only does this result in a visually pleasing bell, but it protects the upright support, the resilient element, the lever, and the lever holding means from being damaged, as the hollow body may at least partly enclose these components. Dirt and debris are also less likely to interfere with the functioning of these components.

The bell has a non-operated position, wherein the bell is not operated, and an operated position. Pressing the operating section of the lever forces the bell from the non-operated position to the operated position wherein the contact outer end of the resilient element is deflected primarily in a direction towards the upright support, causing the resilient element to tension. Subsequent release of the operating section causes the lever to hit an internal side of the hollow element whereafter the bell returns to its non-operated position.

The pivotable connection can comprise at least one circular arc shaped recess, preferably a semi-circle shaped recess, and at least one shaft; wherein the shaft is adapted to pivot in the recess and wherein the shaft exclusively pivots in the circular arc shaped recess. In contrast to a pivotable connection wherein a shaft extends into a hole or circular opening, a circular arc shaped recess has the advantage that less material is required in comparison with a hole. When the recess has a semi-circle shape, or a part of a semi-circle, a shaft would normally not be held in place by this recess. The resilient pressing of the contact outer end of the resilient element against the lever contact end prevents the shaft from exiting the recess. When assembling the bell, the contact outer end of the resilient element can be pushed towards the upright support, thereafter, the lever can be inserted in between the contact outer end of the resilient element and the lever holding means.

The pressure of the resilient element acts upon the lever and forces the shaft in the recess. Due to this pressure, the shaft remains in position. Apart from requiring less material, this greatly facilitates the assembly process of the bell.

The resilient element may be connected to the upright support at a location outside of the hollow body. As the length of the resilient element increases, the force required to deflect contact outer end of the resilient element towards the upright support is reduced. A relatively long resilient element can thus have a larger cross section, while still possessing the required flexibility, in comparison with a relatively short resilient element. Connecting the resilient element to the upright support at a location outside of the hollow body is advantageous, as the length of the resilient element is further increased as compared to connecting the resilient element to the upright support at a location inside of the hollow body.

Preferably, the handlebar attachment means, the upright support, the lever holding means, and the resilient element are comprised of a single continuous plastic part. This greatly facilitates the manufacturing process of the bell and reduces the number of individual components that have to be assembled. In addition, the durability of the bell is increased, as there are fewer connections between individual components that represent a risk of breaking. A continuous plastic part is for example a single piece of moulded plastic.

### Figures

The present invention will be further elucidated by means non-limiting exemplary embodiments illustrated in the following figures, wherein:
Figure 1 shows a perspective view of a bell according to the present invention.
Figure 2 shows a perspective view of the bell shown in Figure 1 wherein the hollow element and the lever have been removed.
Figure 3 shows a side view of the bell of Figure 2 including the lever.
Figure 4 shows a side view of an alternative embodiment of the bell, wherein the hollow element has been removed.
Figure 5 shows a side view of another alternative embodiment of the bell, wherein the hollow element has been removed.

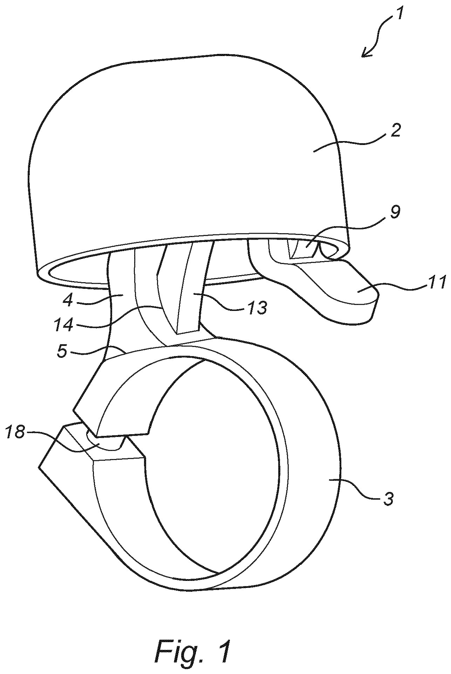

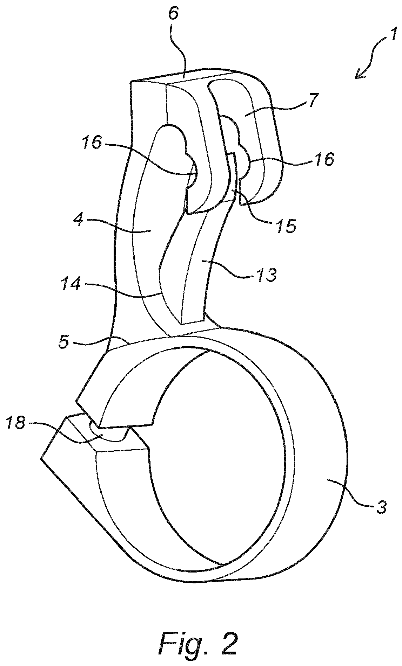

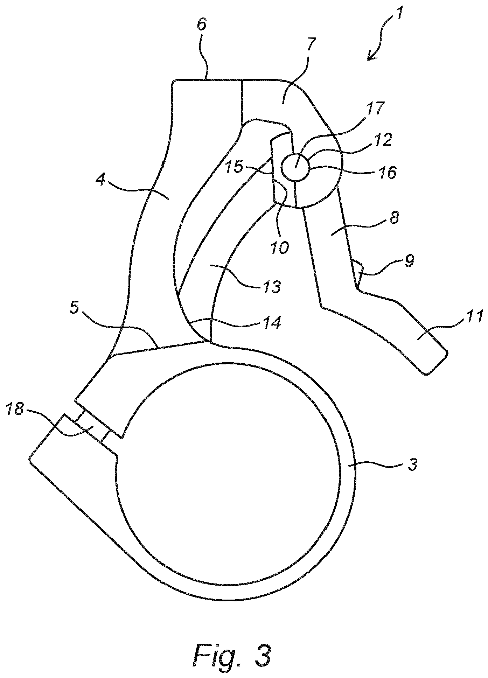

Figure 1 shows a bell 1 for attachment to a bicycle handlebar comprising a hollow body 2 in the shape of a dome. Figure 2 shows a perspective view of the bell 1 of Figure 1, wherein the hollow body 2 and the lever 8 have been removed. Figure 3 shows a side view of the bell 1 of Figure 2. The bell 1 comprises handlebar attachment means 3 to attach the bell to handlebars of a bicycle. The handlebar attachment means 3 in Figure 1 has a ring-like shape and can be tightened via a screw 18 such that the bell 1 can be fastened to the handlebars. The bell further comprises and upright support 4 which is only partly visible. At a first outer end 5 of the upright support 4, it is attached to the handlebar attachment means 3. At a second outer end 6, opposite the first outer end 5, the upright support 4 is attached to the hollow body 2. A lever holding means 7 is connected to the upright support 4. The lever holding means 7 is in its entirety located inside the hollow body 2, and therefore not visible. The bell 1 comprises a lever 8. The lever 8 comprises a protrusion 9 for striking the hollow body 2. This lever 8 comprises a lever contact end 10 which is located inside the hollow body 2 and not visible. The lever 8 also comprises an operating section 11 for operating the lever 8. The operating section 11 can be operated by a finger of a user. The lever 8 is pivotably connected to the lever holding means 7 via a pivotable connection 12 and the operating section 11 is located outside the hollow body 2. As such, the operating section 11 is accessible for anyone using the bell 1. The bell 1 comprises a resilient element 13 having an attachment outer end 14 connected to the upright support 4. The resilient element 13 is a resilient element 13 and extends from the attachment outer end 14 to an opposite contact outer end 15. The contact outer end 15 is not visible in Figure 1 as it is located within the hollow body 2. The contact outer end 15 of the resilient element 13 is resiliently pressed against the lever contact end 10. The the direction in which the upright support 4 and the direction in which the resilient element 13 extend mutually enclose an angle between 0 and 45 degrees. In Figure 1, the mutually enclosed angle ranges between 13 and 17 degrees.

Referring now to Figures 2 and 3, the dome-shaped hollow body 2 of the bell 1 has been removed. The lever holding means 7 and the pivotable connection 12 are now visible. The lever holding means 7 comprises two semi-circle shaped recesses 16, and the lever 8 comprises a shaft 17. The shaft is divided in two parts, located on either side of the lever holding means 7. There are two semi-circle shaped recesses 16 wherein these shaft parts rest. The resilient element 13 presses with its contact outer end 15 against the lever contact end 10. The exerted pressure keeps the shaft parts 17 firmly in place. The shaft parts 17 can pivot in the recesses 16. The shaft parts are kept in place only by the exerted pressure of the resilient element 13 and both semi-circle shaped recesses 16.

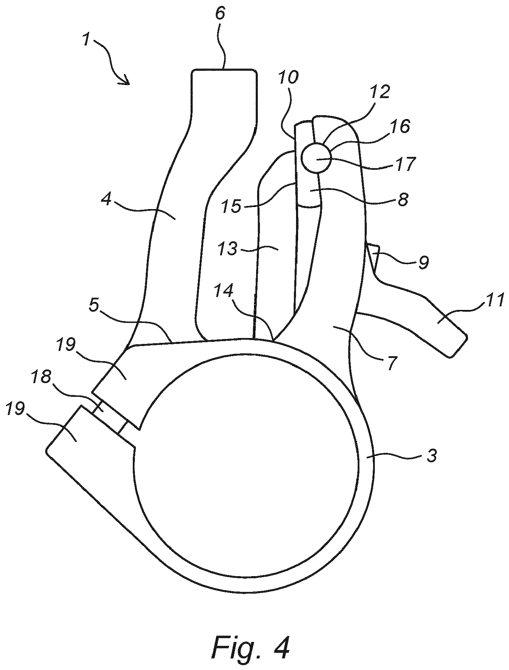

A side view of an alternative embodiment of the bell according to the present invention is shown in Figures 4. The A bell 1 for attachment to a bicycle handlebar, comprises a hollow body 2, a handlebar attachment means 3, an upright support 4 comprising a first outer end 5 connected to the handlebar attachment means 3, and a second outer end 6 connected to the hollow body 2. The bell 1 further comprises a lever holding means 7.

In the embodiment shown in Figure 4, the lever holding means 7 is connected to the handlebar attachment means 3. As shown in all Figures, the handlebar attachment means 3 is shaped like a ring, wherein the circle shape of the ring is interrupted providing two disconnected parts 19. Each of these parts has a screw hole. The ring can surround a bicycle handlebar and a screw can be inserted in both screw holes, enabling fixation of the ring to the handlebar by rotating the screw 18 and pulling both disconnected parts 19 towards each other.

The bell further comprises a lever 8 comprising a protrusion 9 for striking the hollow body 2, a lever contact end 10, and an operating section 11 for operating the lever 8. The lever 8 is pivotably connected to the lever holding means 7 via a pivotable connection 12 similar to the pivotable connection shown in Figures 2 and 3. The operating section 11 is located outside the hollow body 2, facilitating a user to operate the bell.

In Figure 4, the resilient element 13, having an attachment outer end 14, is connected to the handlebar attachment means 3 and not to the upright support 4. The resilient element 13 extends from the attachment outer end 14 to an opposite contact outer end 15. The upright support 4 and the resilient element 13 are oriented parallel, or close to parallel to each other. The contact outer end 15 is resiliently pressed against the lever contact end 10. and the direction in which the upright support 4 and the direction in which the resilient element 13 extend mutually enclose an angle between 0 and 45 degrees.

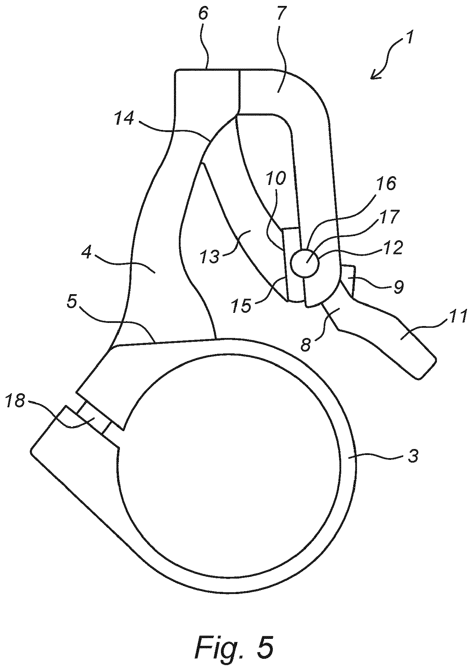

Figure 5 shows another alternative embodiment of a bell 1 according to the present invention. The lever holding means 7 is connected to the upright support 4 and extends further towards the handlebar attachment means 3 as the embodiment shown in Figures 1, 2, and 3 and the embodiment shown in Figures 4 and 5.

The lever 8 is shortened in comparison to the embodiments shown in Figures 1 - 4, such that the lever 8 does not contact the handlebar attachment means 3 when the bell 1 is operated. The resilient element 13 is connected with its attachment outer end 14 to the upright support 4 at a location close to the second outer end 6 of the upright support 4. The mutual enclosed angle between ranges between 10 and 30 degrees and is oriented upside-down when compared to the mutual enclosed angle as visible in Figure 3.

It will be clear that the invention is not limited to the exemplary embodiments which are illustrated and described here, but that countless variants are possible within the framework of the attached claims, which will be obvious to the person skilled in the art. In this case, it is conceivable for different inventive concepts and/or technical measures of the above-described variant embodiments to be completely or partly combined without departing from the inventive idea described in the attached claims.

The verb 'comprise' and its conjugations as used in this patent document are understood to mean not only 'comprise', but to also include the expressions 'contain', 'substantially contain', 'formed by' and conjugations thereof.

## Claims

1. A bell (1) for attachment to a bicycle handlebar, comprising:
(a) a hollow body (2);
(b) a handlebar attachment means (3);
(c) an upright support (4) comprising a first outer end (5) connected to the handlebar attachment means (3), and a second outer end (6) connected to the hollow body (2);
(d) a lever holding means (7) connected to the upright support (4) and/or the handlebar attachment means (3);
(e) a lever (8) for striking the hollow body (2) comprising, a lever contact end (10), and an operating section (11) for operating the lever (8), wherein the lever (8) is pivotably connected to the lever holding means (7) via a pivotable connection (12) and wherein the operating section (11) is located outside the hollow body (2); and
(f) a resilient element (13) having an attachment outer end (14) connected to the upright support (4) and/or handlebar attachment means (3);
wherein the resilient element (13) extends from the attachment outer end (14) to an opposite contact outer end (15);
wherein the contact outer end (15) is resiliently pressed against the lever contact end (10); and
wherein the direction in which the upright support (4) and the direction in which the resilient element (13) extend mutually enclose an angle between 0 and 45 degrees.

2. A bell (1) according to claim 1, wherein the upright support (4) and/or the resilient element (13) are elongate.

3. A bell (1) according to claim 1 or claim 2, wherein the lever (8) comprises a protrusion (9) for striking the hollow body,
Wherein the protrusion (9) is at least partially located within the hollow body (2).

4. A bell (1) according to any of the preceding claims, wherein the angle is between 2 and 40 degrees, between 3 and 35 degrees, between 3 and 30 degrees, between 5 and 25 degrees, between 8 and 25 degrees, between 10 and 22 degrees, between 12 and 20 degrees, between 13 and 17 degrees, or between 14 and 16 degrees.

5. A bell (1) according to any of the preceding claims, wherein the lever holding means (7) is connected to the upright support (4); wherein preferably the lever holding means (7) is not connected to the handlebar attachment means (3).

6. A bell (1) according to any of the preceding claims, wherein the resilient element (13) is connected to the upright support (4); wherein preferably the resilient element (13) is not connected to the handlebar attachment means (3).

7. A bell (1) according to claim 6, wherein the upright support (4) and the resilient element (13) are connected such that the upright support (4) and the resilient element (13) form a V-shape.

8. A bell (1) according to any of the preceding claims, wherein the resilient element (13) is a beam, having a square cross section.

9. A bell (1) according to any of the preceding claims, wherein the contact outer end (15) of the resilient element (13) is a flat surface of having a surface area ranging between 0.5 mm² and 25 mm² and wherein the lever contact end (10) is a flat surface having a surface area ranging between 0.5 mm² and 25 mm²; wherein, when the bell (1) is not operated, both flat surfaces are flush with each other and abut each other.

10. A bell (1) according to any of the preceding claims, wherein the resilient element (13) is made of plastic, such as high density polyethylene, polycarbonate, acrylonitrile butadiene styrene, polyphenylsulfone, ultra-high-molecular-weight polyethylene, or polyoxymethylene.

11. A bell (1) according to any of the preceding claims, wherein the upright support (4), the resilient element (13), the lever (8) and the lever holding means (7) are at least partly located inside the hollow body (2).

12. A bell (1) according to any of the preceding claims, wherein the bell (1) has a non-operated position, wherein the bell (1) is not operated, and an operated position;
wherein pressing the operating section (11) of the lever (8) forces the bell (1) from the non-operated position to the operated position wherein the contact outer end (15) of the resilient element (13) is deflected primarily in a direction towards the upright support (4), causing the resilient element (13) to tension, and
wherein subsequent release of the operating section (11) causes the lever (8) to hit an internal side of the hollow element (2), whereafter the bell (1) returns to its non-operated position.

13. A bell (1) according to any of the preceding claims, wherein the pivotable connection (12) comprises at least one circular arc shaped recess (16), preferably a semi-circle shaped recess (16), and at least one shaft (17);
wherein the shaft (17) is adapted to pivot in the recess (16) and wherein the shaft (17) exclusively pivots in the circular arc shaped recess (16).

14. A bell (1) according to any of the preceding claims, wherein the resilient element (13) is connected to the upright support (4) at a location outside of the hollow body (2).

15. A bell (1) according to any of the preceding claims, wherein the handlebar attachment means (3), the upright support (4), the lever holding means (7) and the resilient element (13) are comprised of a single continuous plastic part.
